# EUROPÄISCHE PATENTANMELDUNG

(11) **EP 2 249 179 A2**
(43) Veröffentlichungstag der Anmeldung: **10.11.2010**
(21) Anmeldenummer: 10004235.7
(22) Anmeldetag: 21.04.2010
(51) Int. Cl.: G01S 17/10

(54) **Anordnung und Verfahren für eine Entfernungsmessung**

(30) Priorität: 28.04.2009 DE 102009018926
(71) Anmelder: Astrium GmbH, 82024 Taufkirchen (DE)
(72) Erfinder: Noé, Reinhold, Prof., 33100 Paderborn (DE)
(74) Vertreter: Avenhaus, Beate

(57) **Zusammenfassung**

Bei dieser Anordnung und dem zugehörigen Verfahren für eine vorzugsweise optische Entfernungsmessung mit digital modulierten Signalen wird ein Empfangstaktsignal CL2 mit einer Takt-und-Datenrückgewinnung CDR aus dem Empfangssignal RXS wiedergewonnen und als Sendetaktsignal CL1 des modulierten Sendesignals TXS eingesetzt. Auf diese Weise wird eine feste Zahl von Datenpulsen im Ring Sender TX - Messpfad P1 - Empfänger RX - Sender TX untergebracht. Durch einen fehlertoleranten Vergleich zwischen gesendeten und empfangenen Daten kann man bestimmen, wieviele Datenpulse der Ring enthält. Mit einem Zähler wird die Schleifentaktfrequenz CLFL oder Symboldauer CLTL im Ring gemessen. Aus beiden berechnet man die Entfernung D1, D2. Laufzeitänderungen von Optik und Elektronik kann man durch Umschalten zwischen zwei Messpfaden P1, P2 herauskalibrieren.

## Beschreibung

Die Erfindung betrifft eine Anordnung sowie ein dazugehöriges Verfahren zur Entfernungsmessung nach dem Oberbegriff der unabhängigen Patentansprüche 1 und 13.

In der Messtechnik ist folgendes Laufzeit- und Entfernungsmessverfahren bekannt: Ein elektromagnetisches Signal, beispielsweise eine Radiowelle oder ein optisches Signal, wird mit einem bekannten Datensignal fester Taktfrequenz, üblicherweise einem Gold-Code oder auch einer Pseudozufallsfolge, moduliert. Es wird ausgesendet, an einem Messobjekt, dessen Entfernung zum Entfernungsmesssystem bestimmt werden soll, zumindest teilweise reflektiert, beispielsweise durch eine metallische Wand oder einen Tripelspiegel, und wieder empfangen. Anschließend wird das Empfangssignal mit dem Sendesignal im elektrischen Bereich korreliert. Die zeitliche Verschiebung des Empfangssignals gegenüber dem Sendesignal ist ein Maß für die Entfernung.

Nachteilig bei diesem Stand der Technik ist die begrenzte zeitliche und damit auch örtliche Auflösung entsprechend der Symboldauer, oder entsprechend einem Bruchteil davon im Falle der Überabtastung. Ein weiterer Nachteil sind die hohen Kosten und der hohe Leistungsverbrauch solcher überabgetasteter Analog-Digital-Wandler.

Aufgabe der Erfindung ist es daher, eine Anordnung sowie ein dazugehöriges Verfahren für eine Entfernungsmessung anzugeben, die hohe Auflösung bei niedrigen Kosten und niedrigem Leistungsverbrauch gewährleisten.

Diese Aufgabe wird durch eine im Patentanspruch 1 angegebene Anordnung sowie durch ein im Patentanspruch 13 angegebenes Verfahren gelöst.

Die erfindungsgemäße Lösung der Aufgabe bezüglich der Anordnung liegt darin, dass die Messeinheit einen Regenerator aufweist, der aus dem Empfangssignal ein zweites Taktsignal wiedergewinnt, dass ein Mittel zur Verwendung des zweiten Taktsignals als erstes Taktsignal vorgesehen ist, dass die Messeinheit einen Frequenzzähler aufweist, der einen Taktsignalparameter eines Taktsignals misst.

Die Anordnung nach Anspruch 1 bringt den Vorteil mit sich, dass das Entfernungsmesssystem einfacher aufgebaut ist als beim Stand der Technik und eine sehr hohe Auflösung aufweist. Auch die Kosten sind sehr niedrig.

Vorteilhafte Weiterbildungen sind in den Unteransprüchen angegeben.

Eine vorteilhafte Weiterbildung zeichnet sich dadurch aus, dass die Messeinheit einen Verzögerungszähler aufweist, der einen Verzögerungszählstand ermittelt, der einer linearen Funktion der Anzahl von Symboldauern des Taktsignals zwischen Sender und Empfänger entspricht.

Vorteilhaft ist es auch, wenn der Frequenzzähler einen ersten Frequenzzählereingang aufweist, an dem ihm ein Zählreferenzsignal zugeführt wird, wenn der Frequenzzähler einen zweiten Frequenzzählereingang aufweist, an dem ihm ein Taktsignal zugeführt wird, wenn der Frequenzzähler einen ersten Frequenzzählerausgang aufweist, an dem er einen Taktsignalparameter zur Verfügung stellt.

Dabei ist es besonders von Vorteil, wenn der Frequenzzähler aus dem Zählreferenzsignal ein Zählintervall abgeleitet und die Anzahl der innerhalb des Zählintervalls auftretenden Impulse des Taktsignals als Taktsignalparameter zählt, dass am ersten Frequenzzählerausgang der sich dabei ergebenden Frequenzzählstand vorliegt.

Eine vorteilhafte Weiterbildung davon zeichnet sich dadurch aus, dass eine Recheneinheit vorgesehen ist, die eine Pfadlänge (D1, D2) gleich einem Verzögerungszählstand (DCC1, DCC2) geteilt durch einen Frequenzzählstand (F1, F2) mal eine erste Konstante (a1) nach den folgenden Formeln berechnet:
D1 = DCC1/F1*a1
D2 = DCC2/F2*a1.

Insbesondere vorteilhaft ist eine Ausgestaltung, die sich dadurch auszeichnet, dass zwischen Sender und Empfänger für die Übertragung des Sendesignals abwechselnd ein erster Messpfad und ein zweiter Messpfad vorgesehen sind, für die ein erster beziehungsweise zweiter Verzögerungszählstand und ein erster beziehungsweise zweiter Frequenzzählstand auftreten.

Vorteilhaft ist es auch, wenn der Frequenzzähler aus dem Taktsignal ein Zählintervall ableitet und die Anzahl der innerhalb des Zählintervalls auftretenden Impulse des Zählreferenzsignals als Taktsignalparameter zählt und wenn am ersten Frequenzzählerausgang der sich dabei ergebende Symboldauerzählstand vorliegt.

Eine Weiterbildung davon zeichnet sich dadurch aus, dass eine Recheneinheit vorgesehen ist, die eine Pfadlänge (D1, D2) gleich einem Verzögerungszählstand (DCC1, DCC2) mal einen Symboldauerzählstand (T1, T2) mal eine fünfte Konstante (a5) nach den folgenden Formeln berechnet:
D1 = DCC1*T1*a5
D2 = DCC2*T2*a5.

Vorzugsweise sind zwischen Sender und Empfänger für die Übertragung des Sendesignals abwechselnd ein erster Messpfad und ein zweiter Messpfad vorgesehen, für die ein erster bzw. zweiter Verzögerungszählstand und ein erster bzw. zweiter Symboldauerzählstand auftreten.

Insbesondere vorteilhaft ist eine Ausgestaltung, die sich dadurch auszeichnet, dass als ein erstes Mittel ein Taktschalter vorgesehen ist, der einen ersten Steuereingang aufweist, an dem das Steuersignal zugeführt wird, der einen ersten Schaltereingang aufweist, an dem das Fülltaktsignal zugeführt wird, der einen zweiten Schaltereingang aufweist, an dem das zweite Taktsignal zugeführt wird, der einen Schalterausgang aufweist, an dem das erste Taktsignal abgegeben wird, wobei je nach Zustand des Steuersignals erster beziehungsweise zweiter Schaltereingang mit dem Schalterausgang verbunden ist.

In einer vorteilhaften Weiterbildung ist als ein zweites Mittel eine direkte Schleifenverbindung vom zweiten Regeneratorausgang zum Bitmustergeneratoreingang vorgesehen.

Insbesondere vorteilhaft ist eine Ausgestaltung, die sich dadurch auszeichnet, dass als ein drittes Mittel der Regenerator einen zweiten Steuereingang aufweist, dem das Steuersignal zugeführt wird, dass eine Phasenregelschleife des Regenerators je nach Zustand des Steuersignals im normalen Betrieb arbeitet oder so außer Betrieb gesetzt wird, dass die Schleifentaktfrequenz des zweiten Taktsignals einen in Entfernung von den Rändern des Abstimmbereichs dieser Phasenregelschleife liegenden Wert annimmt.

Der das Verfahren für eine Entfernungsmessung betreffende Teil der Aufgabe wird mit den Merkmalen des Anspruchs 13 mit Hilfe eines gemäß einem ersten Taktsignal getakteten Bitmustersignals, eines Sendesignals, welches von einem Sender ausgesendet wird und das Bitmustersignal enthält, und eines Empfangssignals, das von einem Empfänger, von welchem das Sendesignal empfangen wird, abgegeben wird, wobei die Verzögerung des Empfangssignals gegenüber dem Sendesignal gemessen wird, dadurch gelöst, dass aus dem Empfangssignal ein zweites Taktsignal wiedergewonnen wird, dass das zweite Taktsignals als erstes Taktsignal verwendet wird und dass ein Taktsignalparameter eines Taktsignals gemessen wird.

Dieses Verfahren nach Anspruch 13 bringt ebenfalls den Vorteil mit sich, dass das Entfernungsmesssystem einfacher aufgebaut ist als beim Stand der Technik und eine sehr hohe Auflösung aufweist. Auch hier sind die Kosten sehr niedrig.

Eine vorteilhafte Weiterbildung des Verfahrens zeichnet sich dadurch aus, dass ein Verzögerungszählstand ermittelt wird, der einer linearen Funktion der Anzahl von Symboldauern des Taktsignals zwischen Sender und Empfänger entspricht.

Eine andere vorteilhafte Weiterbildung des Verfahrens zeichnet sich dadurch aus, dass aus einem Zählreferenzsignal ein Zählintervall abgeleitet wird, dass die Anzahl der innerhalb des Zählintervalls auftretenden Impulse des Taktsignals gezählt wird und als Frequenzzählstand einen Taktsignalparameter bildet.

Noch eine andere vorteilhafte Weiterbildung des Verfahrens zeichnet sich dadurch aus, dass eine Pfadlänge (D1, D2) gleich einem Verzögerungszählstand (DCC1, DCC2) geteilt durch einen Frequenzzählstand (F1, F2) mal eine erste Konstante (a1) nach den folgenden Formeln berechnet wird:
D1 = DCC1/F1*a1
D2 = DCC2/F2*a1.

Vorteilhaft ist es auch, wenn das Sendesignal abwechselnd über einen ersten Messpfad und einen zweiten Messpfad übertragen wird, für die ein erster beziehungsweise zweiter Verzögerungszählstand und ein erster beziehungsweise zweiter Frequenzzählstand ermittelt werden.

Auch vorteilhaft ist es, wenn aus dem Taktsignal ein Zählintervall abgeleitet wird, dass die Anzahl der innerhalb des Zählintervalls auftretenden Impulse eines Zählreferenzsignal gezählt wird und als Symboldauerzählstand einen Taktsignalparameter bildet.

Dabei ist es von Vorteil, wenn eine Pfadlänge (D1, D2) gleich einem Verzögerungszählstand (DCC1, DCC2) mal einen Symboldauerzählstand (T1, T2) mal eine fünfte Konstante (a5) gemäß den folgenden Formeln berechnet wird:
D1 = DCC1*T1*a5
D2 = DCC2*T2*a5.

Vorteilhaft ist es weiterhin, wenn das Sendesignal abwechselnd über einen ersten Messpfad und einen zweiten Messpfad übertragen wird, für die ein erster beziehungsweise zweiter Verzögerungszählstand und ein erster beziehungsweise zweiter Symboldauerzählstand ermittelt werden.

Außerdem ist es von Vorteil, wenn als erstes Taktsignal je nach Zustand des Steuersignals ein Fülltaktsignal oder das zweite Taktsignal in einem Taktschalter ausgewählt wird.

Ebenfalls vorteilhaft ist es, wenn als erstes Taktsignal über eine direkte Schleifenverbindung direkt das zweite Taktsignal ausgewählt wird.

Noch eine weitere vorteilhafte Weiterbildung des Verfahrens zeichnet sich dadurch aus, dass eine Phasenregelschleife eines Regenerators, durch den aus dem Empfangssignal das zweite Taktsignal wiedergewonnen wird, je nach Zustand des Steuersignals in normalen Betrieb versetzt wird oder so außer Betrieb gesetzt wird, dass die Schleifentaktfrequenz des zweiten Taktsignals einen in Entfernung von den Rändern des Abstimmbereichs dieser Phasenregelschleife liegenden Wert annimmt.

Die Erfindung wird anhand von Ausführungsbeispielen näher erläutert.

Es zeigen
- Figur 1: eine Anordnung für eine Entfernungsmessung,
- Figur 2: einen Ausschnitt und Variante dieser Anordnung mit Pfadumschaltung,
- Figur 3: ein Zeitdiagramm von Signalen, das die Ablaufsteuerung der Anord- nung erklärt.

Bei der erfindungsgemäßen Anordnung ist ein Regenerator vorgesehen, der aus dem Empfangssignal ein Empfangstaktsignal wiedergewinnt, wobei das Empfangstaktsignal als Sendetaktsignal des modulierten Sendesignals dient, und wobei ein Frequenzzähler vorgesehen ist, der eine Schleifentaktfrequenz oder Symboldauer misst.

Durch die Wiedergewinnung des Empfangstaktsignals und seine Verwendung als Sendetaktsignal wird eine feste Zahl von Datensymbolen im Ring Sender - Messpfad - Empfänger - Sender untergebracht. Dafür können vorzugsweise Takt-und-Datenrückgewinnungen und Multiplexer/Demultiplexer der optischen Übertragungstechnik und programmierbare Logikbausteine wie FPGAs eingesetzt werden. Das rückgewonnene Empfängertaktsignal dient als Sendetaktsignal. Der ganze Ring kann als Oszillator mit langer Umlaufzeitverzögerung betrachtet werden. Durch einen fehlertoleranten Vergleich zwischen gesendeten und empfangenen Daten lässt sich bestimmen, wie viele Datensymbole der Ring enthält. Die Taktimpulse werden in einem quarzstabilen Zählintervall gezählt. Auf diese Weise stellt man fest, wie lang eine Symboldauer ist. Durch die Anzahl der Datensymbole im Ring und die Symboldauer oder Schleifentaktfrequenz bestimmt man die Verzögerung im Ring, daraus unter Verwendung der Lichtgeschwindigkeit die Entfernung. Laufzeitänderungen von Optik und Elektronik lassen sich, wie beim Stand der Technik, durch einen zweiten Messpfad als Referenz herauskalibrieren.

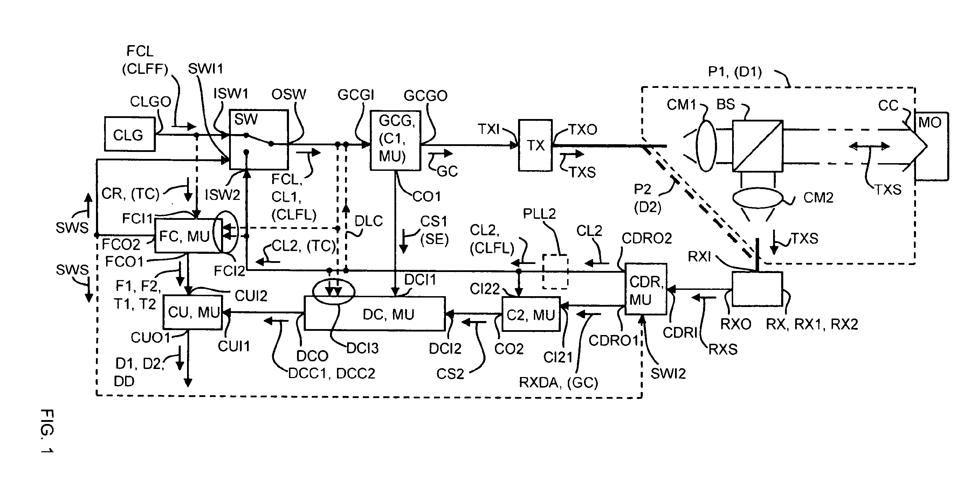

In **Figur 1** ist eine erfindungsgemäße Anordnung für eine Entfernungsmessung gezeigt. Sie verwendet ein optisches Sendesignal. Genauso gut könnte stattdessen eine Radiowelle als Sendesignal verwendet werden.

Es ist zweckmäßig, für die erfindungsgemäße Anordnung und im dazugehörigen Verfahren eine Initialisierungsphase vorzusehen. Es ist ferner zweckmäßig, wenn während der Initialisierungsphase ein Taktgenerator CLG ein Fülltaktsignal FCL mit einer Fülltaktfrequenz CLFF erzeugt und es an einem Taktgeneratorausgang CLGO des Taktgenerators CLG bereitstellt. Von dort wird es zu einem ersten Schaltereingang ISW1 eines Taktschalters SW geleitet. Dem Taktschalter SW wird ein Steuersignal SWS an einem ersten Steuereingang SWI1 zugeleitet. Wenn das Steuersignal SWS gleich 0 ist, wird der erste Schaltereingang ISW1 mit einem Schalterausgang OSW des Taktschalters SW verbunden. Wenn das Steuersignal SWS gleich 1 ist, wird ein zweiter Schaltereingang ISW2 mit dem Schalterausgang OSW verbunden. Während der Initialisierungsphase ist das Steuersignal SWS gleich 0. Deshalb erscheint das Fülltaktsignal FCL am Schalterausgang OSW und dient als erstes Taktsignal CL1. Eine Schleifentaktfrequenz CLFL des ersten Taktsignals CL1 ist während der Initialisierungsphase identisch mit der Fülltaktfrequenz CLFF.

Das erste Taktsignal CL1 wird einem Bitmustergeneratoreingang GCGI eines Bitmustergenerators GCG zugeführt. Dieser erzeugt ein Bitmustersignal GC mit der Schleifentaktfrequenz CLFL und stellt es an einem Bitmustergeneratorausgang GCGO bereit. Das Bitmustersignal GC weist eine Autokorrelationsfunktion mit ausgeprägtem Maximum bei Zeitverschiebung null auf. Als Bitmuster des Bitmustersignals GC eignen sich insbesondere Pseudozufallsfolgen und Goldkodefolgen, wodurch die Struktur des Bitmustergenerators GCG festgelegt wird. Anders als die Bezeichnung Bitmustersignal GC suggeriert, lassen sich als Bitmustersignal GC nicht nur binäre Datenmuster, sondern beispielsweise auch mehrstufige Datenmuster und komplexwertige, also In-Phase- und Quadraturdatenmuster einsetzen.

Der Bitmustergenerator GCG enthält auch einen ersten Koinzidenzdetektor C1, der an einem ersten Koinzidenzsignalausgang CO1, der ebenfalls Teil des Bitmustergenerators GCG ist, ein erstes Koinzidenzsignal CS1 abgibt. Es zeigt an, wenn gerade eine bestimmte, innerhalb einer Periode des als repetitiv ausgeprägten Bitmustersignals GC nur einmal auftretende Koinzidenzsequenz SE aufgetreten ist. Das kann beispielsweise durch Vergleich der Inhalte von Schieberegistern, die der Erzeugung einer Pseudozufallsfolge dienen oder in die das Bitmustersignal GC geschoben wird, mit einem festen Wort erfolgen.

Das Bitmustersignal GC wird einem Sendereingang TXI eines Senders TX zugeführt. Im Sender TX moduliert das Bitmustersignal GC ein Sendesignal TXS, welches vom Sender TX an einem Senderausgang TXO abgegeben wird. Das Sendesignal TXS ist ein elektromagnetisches Signal, beispielsweise eine Radiowelle oder ein optisches Signal. In letzterem, vorteilhaftem Fall enthält der Sender TX vorzugsweise einen Laser, dessen optisches Signal direkt oder in einem ebenfalls im Sender TX enthaltenen, dem Laser nachgeschalteten Modulator moduliert wird. Der Sender kann auch einen je nach Bedarf als elektrisch oder als optisch ausgebildeten Verstärker aufweisen.

Das Sendesignal TXS gelangt über einen ersten oder zweiten Messpfad P1 bzw. P2 zu einem Empfängereingang RXI eines Empfängers RX. Die Messpfade P1, P2 der Figur 1 sind optisch ausgebildet, entsprechend einem als optisch ausgebildeten Sendesignal TXS. Die optisch ausgeprägten Messpfade P1, P2 enthalten beispielsweise einen Strahlteiler BS, in den das gegebenenfalls zuvor in einem ersten Kollimator CM1 kollimierte Sendesignal TXS eingespeist wird. Nach Verlassen des Strahlteilers BS an einem ersten Strahlteilerausgang BSO1 wird das Sendesignal TXS im ersten Messpfad P1 zumindest teilweise zu einem Messobjekt MO transmittiert. Am Messobjekt MO wird es von einem Reflektor CC, beispielsweise einem Tripelspiegel, zurückreflektiert. Auf dem Rückweg tritt das Sendesignal TXS am ersten Strahlteilerausgang BSO1 wieder in den Strahlteiler BS ein und wird zumindest teilweise im Strahlteiler BS zu einem Empfänger RX abgelenkt, wo es gegebenenfalls durch einen zweiten Kollimator CM2 fokussiert einem Empfängereingang RXI des Empfängers RX zugeleitet wird. Statt des Strahlteilers BS kann auch vorteilhaft ein Zirkulator eingesetzt werden, welcher Strahlteilerverluste vermeidet.

Im Empfänger RX wird das empfangene Sendesignal TXS erforderlichenfalls verstärkt und als elektrisches Signal, genannt Empfangssignal RXS, an einem Empfängerausgang RXO zur Verfügung gestellt. Sofern das Sendesignal TXS ein optisches Signal ist, wird es im Empfänger RX in ein elektrisches Signal, aus welchem das Empfangssignal RXS gebildet wird, umgewandelt, vorzugsweise mit Hilfe einer Photodiode mit nachgeschaltetem elektrischem Verstärker.

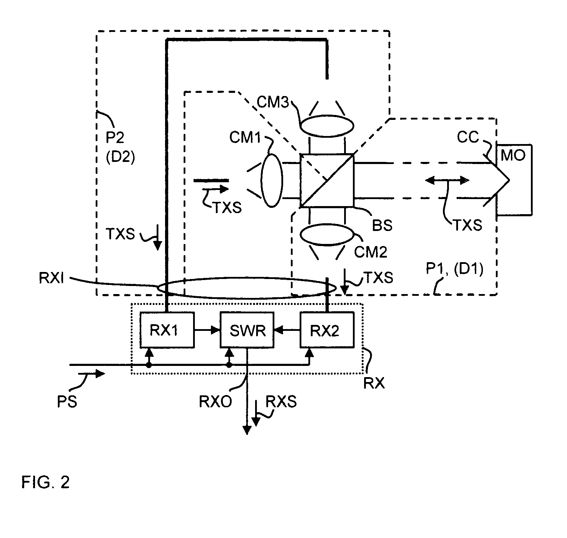

Das Sendesignal TXS kann alternativ zum ersten Messpfad P1 auch über einen zweiten Messpfad P2 dem Empfänger RX zugeleitet werden. Zur Trennung auftretender Empfangsignale RXS muss sendeseitig oder empfangsseitig zwischen erstem und zweitem Messpfad P1 bzw. P2 umgeschaltet werden. Dies erfolgt über einen sendeseitigen oder einen empfängerseitigen Messpfadschalter. Dies ist in **Figur 1** symbolisch durch den gestrichelten zweiten Messpfad P2 dargestellt. In Figur 2, die einen Ausschnitt und Variante dieser Anordnung mit Pfadumschaltung zeigt, ist es genauer gezeigt. Für den Fall optischer Messpfade P1, P2 wird hier der Aufwand eines optischen Messpfadschalters dadurch vermieden, dass der Empfänger RX einen ersten und ein zweiten Eingangsteil RX1, RX2 enthält, die Signale von erstem bzw. zweitem Messpfad P1, P2 erhalten. Dementsprechend besteht der Empfängereingang RXI aus zwei Toren, je eines für den ersten und den zweiten Eingangsteil RX1, RX2. Wenn der erste Eingangsteil RX1 eingeschaltet ist, ist der zweite Eingangsteil RX2 ausgeschaltet und umgekehrt. Dieses komplementäre und abwechselnde Ein- und Ausschalten der Eingangsteile RX1, RX2 bei gleichzeitiger Selektion der Ausgangssignals des gerade eingeschalteten der beiden Eingangsteile RX1, RX2 in einem elektrischen Messpfadschalter SWR gewährleistet die Umschaltung zwischen den weitestgehend optisch ausgebildeten Messpfaden P1, P2 auf rein elektrische Weise mit hoher Extinktion. Die Umschaltung erfolgt über ein Pfadwahlsignal PS, das dem Empfänger und darin den ersten und zweiten Eingangsteilen RX1, RX2 sowie dem Messpfadschalter SWR zugeleitet wird. Es kann beispielsweise vom Frequenzzähler FC bereitgestellt werden. Wenn das Pfadwahlsignal PS gleich 1 bzw. 0 ist, wird der erste bzw. zweite Messpfad P1, P2 ausgewählt.

Um die Dämpfung eines Messpfads P1, P2 auszugleichen, können außerdem optische Verstärker eingesetzt werden. Des weiteren kann der Reflektor CC aktiv, als reflektierender optischer Verstärker oder als optisch-elektrisch-optischer oder optischer Regenerator, ausgelegt sein.

Erfindungsgemäß wird das Empfangssignal RXS einem Regeneratoreingang CDRI eines vorzugsweise als Takt-und-Daten-Rückgewinnung ausgebildeten Regenerators CDR zugeleitet, welcher an einem ersten Regeneratorausgang CDRO1 ein aus dem Empfangssignal RXS wiedergewonnenes Empfangsdatensignal RXDA und an einem zweiten Regeneratorausgang CDRO2 ein aus dem Empfangssignal RXS wiedergewonnenes zweites Taktsignal CL2 bereitstellt. Nach Einrasten des Regenerators CDR, der üblicherweise mit einer Phasenregelschleife für das zweite Taktsignal CL2 und einem vom zweiten Taktsignal CL2 getakteten Datenentscheider zur Bereitstellung des Empfangsdatensignals RXDA ausgestattet ist, entsprechen das zweite Taktsignal CL2 dem ersten Taktsignal CL1 und das Empfangsdatensignal RXDA dem Bitmustersignal GC, zumindest näherungsweise und bei Vernachlässigung gegebenenfalls auftretender Bitfehler.

Empfangsdatensignal RXDA und zweites Taktsignal CL2 werden an einem Koinzidenzdetektordateneingang CI21 bzw. Koinzidenzdetektortakteingang CI22 einem zweiten Koinzidenzdetektor C2 zugeleitet, der an einem zweiten Koinzidenzsignalausgang CO2 ein zweites Koinzidenzsignal CS2 abgibt. Es zeigt an, wenn gerade die Koinzidenzsequenz SE innerhalb des repetitiven Empfangsdatensignals RXDA aufgetreten ist. Vorzugsweise wird der zweite Koinzidenzdetektor C2 fehlertolerant ausgelegt, damit etwaige Datenentscheidefehler des Regenerators CDR die Koinzidenzdetektion nicht verhindern. Beispielsweise kann der zweite Koinzidenzdetektor C2 so ausgelegt werden, dass durch das zweite Koinzidenzsignal CS2 eine Koinzidenz angezeigt wird, wenn bei Verwendung eines Bitmustersignals GC, welches mit 2³¹-1 Datensymbolen periodisch ist, von einer 64 Datensymbole langen Koinzidenzsequenz SE mindestens 56 Datensymbole als richtig erkannt wurden. Dies lässt Raum selbst für eine ungewöhnlich hohe Bitfehlerquote in der Größenordnung 0,1 und ist ausreichend, weil dieses Bitmustersignal GC bereits durch 31 aufeinanderfolgende Symbole eindeutig identifiziert wird.

Um festzustellen, um wieviele Symbole das Bitmustersignal GC auf einem der Messpfade P1, P2 verzögert wird, ist ein Verzögerungszähler DC vorgesehen. An einem ersten und zweiten Verzögerungszählereingang DCI1, DCI2 werden dem Verzögerungszähler DC das erste bzw. zweite Koinzidenzsignal CS1, CS2 zugeführt. Der Verzögerungszähler DC wird mit einem der Taktsignale CL1, CL2 getaktet, das dem Verzögerungszähler DC an einem dritten Verzögerungszählereingang DCI3 zugeführt wird. Da das zweite Taktsignal CL2 dem ersten Taktsignal CL1 zumindest weitgehend entspricht, kann jedes dieser beiden verwendet werden. Das erste Koinzidenzsignal CS1 setzt den Verzögerungszähler DC zurück und macht das Zählen mit dem Taktsignal CL1, CL2 als Zähltakt möglich. Das zweite Koinzidenzsignal CS2 hält den Verzögerungszähler DC an und macht weiteres Zählen unmöglich. Zumindest zwischen Auftreten eines zweiten Koinzidenzsignals CS2 und erneutem Auftreten eines ersten Koinzidenzsignals CS1, bei Vorhandensein eines Zwischenspeichers auch zu allen Zeiten, wird ein erster oder zweiter Verzögerungszählstand DCC1, DCC2 des Verzögerungszählers DC an einem Verzögerungszählerausgang DCO zur Verfügung gestellt. Der Verzögerungszählerausgang DCO ist mit einem ersten Recheneinheitseingang CUI1 einer Recheneinheit CU verbunden. Erster bzw. zweiter Verzögerungszählstand DCC1, DCC2 ergeben sich bei Verwendung des ersten Messpfads P1 bzw. des zweiten Messpfads P2. Je länger die Laufzeit in einem Messpfad P1, P2 ist, desto größer ist im allgemeinen der entsprechend erreichte Verzögerungszählstand DCC1, DCC2.

Erfindungsgemäß wird das zweite Taktsignal CL2 dem Taktschalter SW an einem zweiten Schaltereingang ISW2 zugeleitet. Die Initialisierungsphase wird benötigt, um den jeweiligen Messpfad P1, P2 mit dem Sendesignal TXS zu füllen und schließlich im Regenerator CDR das zweite Taktsignal CL2 zurückzugewinnen. Wenn dieser Zustand erreicht ist, wird das Steuersignal SWS zur Beendigung der Initialisierungsphase auf 1 gesetzt, was dazu führt, dass der Taktschalter SW das am zweiten Schaltereingang ISW2 zugeführte zweite Taktsignal CL2 zum Schalterausgang OSW leitet, wo es als erstes Taktsignal CL1 dient.

Je nach Phasenunterschied zwischen Fülltaktsignal FCL und zweitem Taktsignal CL2 wird das erste Taktsignal CL1 beim Setzen des Steuersignals SWS auf 1 einen Phasensprung erleiden. Durch die glättende Funktion der Taktrückgewinnung und Phasenregelschleife des Regenerators CDR verschwindet dieser Phasensprung nach einigen Umläufen der Taktsignale CL1, CL2 in dem im wesentlichen durch Taktschalter SW, Bitmustergenerator GCG, Sender TX, Messpfad MP, Empfänger RX, Regenerator CDR und wieder Taktschalter SW gebildeten Ringoszillator. Dadurch verändert sich im allgemeinen die Schleifentaktfrequenz CLFL, sodass sie nicht mehr gleich der Fülltaktfrequenz CLFF ist. Um in der Schleife nicht teilweise die Fülltaktfrequenz CLFF zu messen, sondern die endgültige Schleifentaktfrequenz CLFL, kann man beispielsweise zwischen steigender Flanke des Steuersignals SWS und Beginn des Zählintervalls TC eine geeignete Zeitverzögerung einführen, innerhalb derer die Schleifentaktfrequenz CLFL, ausgehend vom Wert der Fülltaktfrequenz CLFF, ihren endgültigen Wert eingenommen hat. Während in gewöhnlichen Ringoszillatoren das Oszillatorsignal im gesamten Ring vorliegt, ist es im erfindungsgemäß gebildeten Ringoszillator zwischen Bitmustergenerator GCG und Regenerator CDR durch das Bitmustersignal GC und die es transportierenden Signale Sendesignal TXS und Empfangssignal RXS ersetzt.

Durch den Verzögerungszählstand DCC1, DCC2 ist bekannt, wieviele Symbole Verzögerung im Ringoszillator je nach gewähltem Messpfad P1 bzw. P2 auftreten. Es ist zweckmäßig, bei Auftreten des ersten Sendekoinzidenzsignals CS1 den Verzögerungszähler DC nicht auf Null zurückzusetzen, sondern auf einen Ablagewert DCN, der der Anzahl von Symbolverzögerungen zwischen Regenerator CDR über Taktschalter SW bis zum Bitmustergenerator GCG entspricht. Je nach Ausführung, zum Beispiel, wenn das zweite Taktsignal CL2 vor dem zweiten Schaltereingang ISW2 invertiert wird, kann der Ablagewert DCN eine nicht ganze Zahl sein. Auf diese oder andere Weise wird sichergestellt, dass der Verzögerungszählstand DCC1, DCC2 vorzugsweise nicht die Anzahl von Symbolen des Bitmustersignals GC zwischen Bitmustergenerator GCG und Regenerator CDR, sondern die Anzahl von Symbolen im gesamten Ringoszillator wiedergibt. In jedem Fall ist sichergestellt, dass der Verzögerungszählstand DCC1, DCC2 eine lineare Funktion der Anzahl von Symboldauern des Taktsignals CL1, CL2 zwischen Sender TX und Empfänger RX ist. Es kann günstig sein, die Zeitdauer, in der das Steuersignal SWS gleich 1 ist, mindestens so groß wie die Periode des Bitmustersignals GC zu machen, damit auch sehr große Verzögerungszählstände DCC1, DCC2 Messbar werden.

Erfindungsgemäß ist ferner ein Frequenzzähler FC vorgesehen, der einen Taktsignalparameter CLFL, CLTL, F1, F2, T1, T2 misst. Als Taktsignalparameter CLFL, CLTL eignen sich insbesondere die Schleifentaktfrequenz CLFL, dazu proportionale erste und zweite Frequenzzählstände F1, F2, oder als Inverses der Schleifentaktfrequenz CLFL die Taktperiodendauer CLTL mit CLTL = 1/CLFL und dazu proportionale erste und zweite Symboldauerzählstände T1, T2.

In einem ersten Ausführungsbeispiel, in dem als Taktsignalparameter CLFL, F1, F2 die Schleifentaktfrequenz CLFL in Form von ersten und zweiten Frequenzzählständen F1, F2 gemessen wird, wird dem Frequenzzähler FC an einem ersten Frequenzzählereingang FCI1 ein Zählreferenzsignal CR zugeführt. Als Zählreferenzsignal CR kann das Fülltaktsignal FCL mit der Fülltaktfrequenz CLFF verwendet werden. In jedem Fall ist es zweckmäßig, das Zählreferenzsignal CR aus einem möglichst frequenzstabilen temperaturstabilisierten Quarzoszillator oder Rubidiumfrequenznormal abzuleiten, welcher oder welches Teil des Taktgenerators CLG sein kann. Aus dem Zählreferenzsignal CR wird ein Zählintervall TC abgeleitet, also ein Zeitraum bestimmter, konstanter Länge. Der Frequenzzähler FC zählt die Anzahl der innerhalb des Zählintervalls TC auftretenden Impulse des Taktsignals CL1, CL2. Es spielt keine Rolle, ob erstes Taktsignal CL1 oder zweites Taktsignal CL2 eingesetzt werden, weil nach Schließen des Ringoszillators beide - bis auf mögliche statische Phasenunterschiede - identisch sind und die Schleifentaktfrequenz CLFL besitzen. Der Frequenzzähler FC gibt bei Verwendung des ersten bzw. zweiten Messpfads P1, P2 an einem ersten Frequenzzählerausgang FC01 den ersten bzw. zweiten Frequenzzählstand F1, F2 ab, der der jeweiligen Schleifentaktfrequenz CLFL entspricht.

Der erste Frequenzzählerausgang FC01 ist mit einem zweiten Recheneinheitseingang CUI2 der Recheneinheit CU verbunden. Die Recheneinheit CU berechnet die äquivalente erste bzw. zweite Pfadlänge D1, D2 im gesamten Ringoszillator nach der Formel D1 = DCC1/F1*a1 bzw. D2 = DCC2/F2*a1, wobei a1 eine erste Konstante a1 ist, die üblicherweise gleich der Lichtgeschwindigkeit zu wählen ist, oder der Hälfte davon, falls nur der Abstand des Messobjekts MO von Sender TX und Empfänger RX gesucht wird. Erste und zweite Pfadlänge D1, D2 können von der Recheneinheit CU an einem Recheneinheitsausgang CUO zur Verfügung gestellt werden. Der Recheneinheitsausgang CUO kann beispielsweise als serielle oder parallele digitale Schnittstelle ausgebildet sein.

Das Steuersignal SWS wird beispielsweise durch zusätzliche Logikeinheiten innerhalb des Frequenzzählers FC erzeugt und an einem zweiten Frequenzzählerausgang FCO2 des Frequenzzählers FC zur Verfügung gestellt. Der zweite Frequenzzählerausgang FCO2 ist deshalb mit dem ersten Steuereingang SWI1 verbunden.

Um eine gute Messgenauigkeit zu erzielen, ist die Schleifentaktfrequenz CLFL durch Vorgabe einer entsprechenden Fülltaktfrequenz CLFF möglichst groß zu wählen. Natürlich müssen neben Taktgenerator CLG auch Taktschalter SW, Bitmustergenerator GCG, Sender TX, Empfänger RX, Regenerator CDR, Koinzidenzdetektoren C1, C2, Verzögerungszähler DC und Frequenzzähler FC dafür ausgelegt sein. Allerdings sinkt die Empfindlichkeit von Empfänger RX und Regenerator CDR mit zunehmender Schleifentaktfrequenz CLFL. Einer beliebigen Steigerung der Schleifentaktfrequenz CLFL sind daher Grenzen gesetzt, insbesondere bei großen Pfadlängen D1, D2. Zur Erhöhung der Messgenauigkeit können daher n Frequenzzähler FC vorgesehen werden, welche mit n zeitlich geringfügig gegeneinander verschobenen Zählintervallen TC betrieben werden. Beispielsweise können mit einem sogenannten Delay-Locked-Loop in FPGAs der Firma Xilinx aus dem Fülltaktsignal CLF n = 4 gegeneinander phasenverschobene Zählreferenzsignale CR mit relativen Phasen 0°, 90°, 180° und 270° mit der Fülltaktfrequenz CLFF erzeugt werden, aus denen durch Frequenzteilung die Zählintervalle TC der verschiedenen Frequenzzähler FC erzeugt werden. Die von den verschiedenen Frequenzzählern FC gelieferten Einzelzählergebnisse werden zur Ermittlung des ersten und zweiten Frequenzzählstands F1, F2 addiert oder gemittelt.

Ein Problem, das direkt die Entfernungsmessgenauigkeit beeinflusst, ist thermische Drift in den elektronischen und optoelektronischen Bauteilen. Zu diesem Zweck kann zwischen erstem Messpfad P1 und zweitem Messpfad P2 umgeschaltet werden, wobei vorzugsweise einer davon, beispielsweise letzterer, als Referenzpfad dient.

Eine von thermischer Drift wenigstens näherungsweise unabhängige Pfadlängendifferenz DD zwischen erstem und zweitem Messpfad P1, P2 wird von der Recheneinheit CU nach der Formel DD = a2*D1 - a3*D2 + a4 berechnet und am Recheneinheitsausgang CUO abgegeben. Dabei sind a2, a3 und a4 eine zweite, dritte bzw. vierte Konstante a2, a3, a4. Im Idealfall sind zweite und dritte Konstante a2, a3 beide gleich 1, während die vierte Konstante a4 gleich 0 ist. Um eine bessere Temperaturunabhängigkeit der Pfadlängendifferenz DD zu erreichen, kann es in der Praxis günstiger sein, die zweite, dritte und vierte Konstante a2, a3, bzw. a4 abweichend von den Werten 1, 1, bzw. 0 zu wählen.

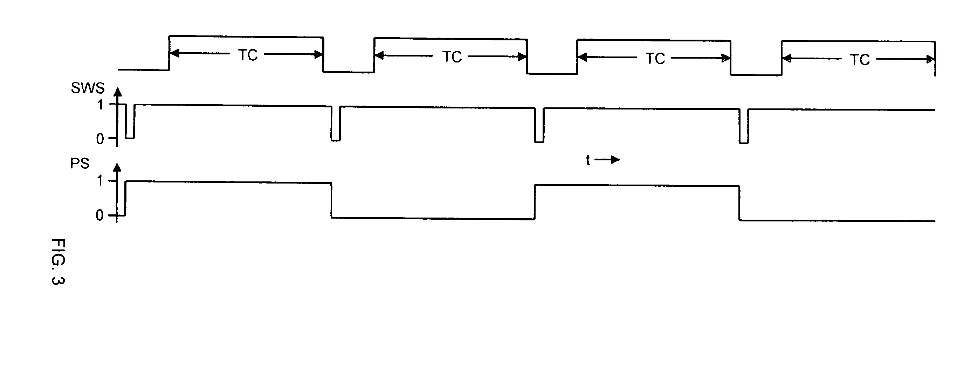

**Figur 3** zeigt ein Zeitdiagramm von Signalen, das die Ablaufsteuerung der Anordnung erklärt, als Funktion der Zeit t. Während der Initialisierungsphasen ist das Steuersignal SWS gleich 0, ansonsten gleich 1. In letzteren Zeitintervallen werden periodisch Zählintervalle TC erzeugt. Etwa zur selben Zeit, zu der das Steuersignal SWS von 1 auf 0 geht, wechselt das Pfadwahlsignal PS seinen Zustand zwischen 0 und 1 oder umgekehrt.

Erster Koinzidenzdetektor C1 als Teil des Bitmustergenerators GCG, Regenerator CDR, zweiter Koinzidenzdetektor C2, Verzögerungszähler DC und Frequenzzähler FC und Recheneinheit CU sind Teil einer Messeinheit MU zur Messung der Verzögerung des Empfangssignals RXS gegenüber dem Sendesignal TXS oder, gleichbedeutend, einer linearen Funktion der Verzögerung des Empfangssignals RXS gegenüber dem Sendesignal TXS.

Im Ausführungsbeispiel der Figur 1 ist der Taktschalter SW als erstes Mittel SW vorgesehen, welches bewirkt, dass das zweite Taktsignal CL2 als erstes Taktsignal CL1 verwendet wird. Eine zweite, alternative Möglichkeit zur Erreichung dieses Ziels besteht darin, dass auf Taktgenerator CLG und Taktschalter SW verzichtet wird, während das zweite Taktsignal CL2 durch eine direkte Schleifenverbindung DLC vom zweiten Regeneratorausgang CDRO2 direkt als erstes Taktsignal CL1 dem Bitmustergeneratoreingang GCGI zugeleitet wird. Die zu diesem Zweck vorgesehene direkte Schleifenverbindung DLC ist ein zweites Mittel. Dabei kann das Problem auftreten, dass eine Phasenregelschleife innerhalb des Regenerators CDR an den Rand ihres Abstimmbereichs gerät, wobei in der Phasenregelschleife stationäre Phasenfehler auftreten, sodass die Taktperiodendauer CLTL nicht mehr genau proportional zur Verzögerung im Ringoszillator ist. Dieses Problem lässt sich dadurch vermeiden, dass der Regenerator CDR so ausgebildet wird, dass sich die Phasenregelschleife außer Betrieb setzen lässt; genaugenommen nur ihr Regelteil, aber nicht der spannungsgesteuerte Oszillator. Dabei erhält der Regenerator CDR einen zweiten Steuereingang SWI2, dem das Steuersignal SWS zugeführt wird. Der zweite Frequenzzählerausgang FCO2 wird zu diesem Zweck mit dem zweiten Steuereingang SWI2 verbunden. Wenn das Steuersignal SWS gleich 0 ist, gibt der so ausgebildete Regenerator CDR ein zweites Taktsignal CL2 ab, dessen Schleifentaktfrequenz CLFL nicht am Rand, sondern in einiger Entfernung von den Rändern des Abstimmbereichs der Phasenregelschleife, vorzugsweise sogar etwa in der Mitte ihres Abstimmbereichs liegt. Wenn das Steuersignal SWS gleich 1 ist, wird im so ausgebildeten Regenerator CDR die Phasenregelschleife in normalen Betrieb versetzt. Der so ausgebildete Regenerator CDR bildet dabei ein drittes Mittel CDR, welches das zweite Mittel DLC ergänzt. Erstes, zweites und drittes Mittel SW, DLC, CDR dienen jeweils der Verwendung des zweiten Taktsignals CL2 als erstes Taktsignal CL1.

In einem weiteren Ausführungsbeispiel, in dem als Taktsignalparameter CLTL, T1, T2 die Taktperiodendauer CLTL in Form von ersten und zweiten Symboldauerzählständen T1, T2 gemessen wird, vertauschen Zählreferenzsignal CR und Taktsignal CL1, CL2 ihre Funktionen. Das Zählintervall TC wird in diesem Fall aus dem Taktsignal CL1, CL2 abgeleitet und der Frequenzzähler FC zählt die Anzahl der innerhalb des Zählintervalls TC auftretenden Impulse des Zählreferenzsignals CR, welches vorzugsweise das Fülltaktsignal FCL ist. Der Frequenzzähler FC gibt dann bei Verwendung des ersten bzw. zweiten Messpfads P1, P2 am ersten Frequenzzählerausgang FC01 den ersten bzw. zweiten Symboldauerzählstand T1, T2 ab, der der jeweiligen Taktperiodendauer CLTL entspricht. Die Recheneinheit CU berechnet in diesem Fall die äquivalente erste bzw. zweite Pfadlänge D1, D2 im gesamten Ringoszillator nach der Formel D1 = DCC1*T1*a5 bzw. D2 = DCC2*T2*a5, wobei a5 eine fünfte Konstante a5 ist, die üblicherweise gleich der Lichtgeschwindigkeit zu wählen ist, oder der Hälfte davon, falls nur der Abstand des Messobjekts MO von Sender TX und Empfänger RX gesucht wird.

Es kann zweckmäßig sein, einen Großteil der erfindungsgemäßen Anordnung in einem programmierbaren Logikbaustein wie zum Beispiel einem FPGA abzubilden. Wenn die Schleifentaktfrequenz CLFL höher sein soll, als der FPGA zulässt, können in Sender TX und Regenerator CDR Multiplexer bzw. Demultiplexer eingesetzt werden.

Viele weitere Variationen der Erfindung sind möglich. Beispielsweise kann das Steuersignal SWS lediglich dann gleich 0 gesetzt werden, wenn die Phasenregelschleife des Regenerators CDR an einen Rand ihres Abstimmbereichs gerät. Die Erfindung eignet sich auch zur Messung von Pfadlängen D1, D2, welche als Funktion der Zeit variieren.

Vorteilhafte Beispiele für Schleifentaktfrequenzen CLFL liegen in der Größenordnung 155,52 MHz * 4^{k}, wobei der Exponent k eine ganze Zahl ist. Denn für diese Frequenzen sind preisgünstige und leistungsfähige Takt- und Datenrückgewinnungen als Regeneratoren CDR kommerziell erhältlich.

Bei großen Pfadlängen D1, D2 und großen Schleifentaktfrequenzen CLFL kann der durch die erfindungsgemäße Anordnung gebildete Ringoszillator auf mehr als einer Mode schwingen. Dies führt zu Instabilität und ungenau gemessenen Pfadlängen D1, D2. Dasselbe gilt, wenn im gebildeten Ringoszillator mehr als eine Phasenregelschleife des Regenerators CDR vorgesehen ist, beispielsweise eine zweite, die im Sender TX untergebracht ist. Um solche Instabilität zu vermeiden, ist es günstig, regelungstechnisch gesehen einen dominierenden, tieffrequenten Pol vorzusehen. Dies lässt sich dadurch erreichen, dass eine von mehreren vorhandenen Phasenregelschleifen eine deutlich niedrigere Durchtrittsfrequenz hat als die anderen. Bei gegebener Taktfrequenz kann der Phasenregelschleife des Regenerators CDR beispielsweise eine weitere Phasenregelschleife PLL2 mit niedrigerer Durchtrittsfrequenz nachgeschaltet werden, in der das zweite Taktsignal CL2 gereinigt wird, bevor es schließlich als erstes Taktsignal CL1 weiterverwendet wird. Dies ist gestrichelt in Figur 1 zu sehen.

## Patentansprüche

1. Anordnung für eine Entfernungsmessung mit einem durch ein erstes Taktsignal (CL1) getakteten Bitmustergenerator (GCG), der ein Bitmustersignal (GC) abgibt, einem durch das Bitmustersignal (GC) angesteuerten Sender (TX), welcher ein Sendesignal (TXS) aussendet, einem Empfänger (RX), welcher das Sendesignal (TXS) empfängt und ein Empfangssignal (RXS) abgibt, und einer Messeinheit (MU) zur Messung der Verzögerung des Empfangssignals (RXS) gegenüber dem Sendesignal (TXS),
**dadurch gekennzeichnet,**
**dass** die Messeinheit (MU) einen Regenerator (CDR) aufweist, der aus dem Empfangssignal (RXS) ein zweites Taktsignal (CL2) wiedergewinnt,
**dass** ein Mittel (SW, DLC, CDR) zur Verwendung des zweiten Taktsignals (CL2) als erstes Taktsignal (CL1) vorgesehen ist,
**dass** die Messeinheit (MU) einen Frequenzzähler (FC) aufweist, der einen Taktsignalparameter (CLFL, CLTL, F1, F2, T1, T2) eines Taktsignals (CL1, CL2) misst.

2. Anordnung nach Anspruch 1,
**dadurch gekennzeichnet,**
**dass** die Messeinheit (MU) einen Verzögerungszähler (DC) aufweist, der einen Verzögerungszählstand (DCC1, DCC2) ermittelt, der einer linearen Funktion der Anzahl von Symboldauern des Taktsignals (CL1, CL2) zwischen Sender (TX) und Empfänger (RX) entspricht.

3. Anordnung nach Anspruch 1 oder 2,
**dadurch gekennzeichnet,**
**dass** der Frequenzzähler (FC) einen ersten Frequenzzählereingang (FCI1) aufweist, an dem ihm ein Zählreferenzsignal (CR) zugeführt wird,
**dass** der Frequenzzähler (FC) einen zweiten Frequenzzählereingang (FCI2) aufweist, an dem ihm ein Taktsignal (CL1, CL2) zugeführt wird,
**dass** der Frequenzzähler (FC) einen ersten Frequenzzählerausgang (FCO1) aufweist, an dem er einen Taktsignalparameter (CLFL, CLTL, F1, F2, T1, T2) zur Verfügung stellt.

4. Anordnung nach Anspruch 3,
**dadurch gekennzeichnet,**
**dass** der Frequenzzähler (FC) aus dem Zählreferenzsignal (CR) ein Zählintervall (TC) abgeleitet und die Anzahl der innerhalb des Zählintervalls (TC) auftretenden Impulse des Taktsignals (CL1, CL2) als Taktsignalparameter (CLFL, F1, F2) zählt, dass am ersten Frequenzzählerausgang (FCO1) der sich dabei ergebenden Frequenzzählstand (F1, F2) vorliegt, wobei vorzugsweise eine Recheneinheit (CU) vorgesehen ist, die eine Pfadlänge (D1, D2) gleich einem Verzögerungszählstand (DCC1, DCC2) geteilt durch einen Frequenzzählstand (F1, F2) mal eine erste Konstante (a1) berechnet (D1 = DCC1/F1*a1, D2 = DCC2/F2*a1).

5. Anordnung nach Anspruch 4,
**dadurch gekennzeichnet,**
**dass** zwischen Sender (TX) und Empfänger (RX) für die Übertragung des Sendesignals (TXS) abwechselnd ein erster Messpfad (P1) und ein zweiter Messpfad (P2) vorgesehen sind, für die ein erster bzw. zweiter Verzögerungszählstand (DCC1, DCC2) und ein erster bzw. zweiter Frequenzzählstand (F1, F2) auftreten.

6. Anordnung nach Anspruch 3,
**dadurch gekennzeichnet,**
**dass** der Frequenzzähler aus dem Taktsignal (CL1, CL2) ein Zählintervall (TC) ableitet und die Anzahl der innerhalb des Zählintervalls (TC) auftretenden Impulse des Zählreferenzsignals (CR) als Taktsignalparameter (CLTL, T1, T2) zählt, dass am ersten Frequenzzählerausgang (FCO1) der sich dabei ergebende Symboldauerzählstand (T1, T2) vorliegt, wobei vorzugsweise eine Recheneinheit (CU) vorgesehen ist, die eine Pfadlänge (D1, D2) gleich einem Verzögerungszählstand (DCC1, DCC2) mal einen Symboldauerzählstand (T1, T2) mal eine fünfte Konstante (a5) berechnet (D1 = DCC1*T1*a5, D2 = DCC2*T2*a5).

7. Anordnung nach Anspruch 6,
**dadurch gekennzeichnet,**
**dass** zwischen Sender (TX) und Empfänger (RX) für die Übertragung des Sendesignals (TXS) abwechselnd ein erster Messpfad (P1) und ein zweiter Messpfad (P2) vorgesehen sind, für die ein erster bzw. zweiter Verzögerungszählstand (DCC1, DCC2) und ein erster bzw. zweiter Symboldauerzählstand (T1, T2) auftreten.

8. Anordnung nach einem der Ansprüche 1 bis 7,
**dadurch gekennzeichnet,**
**dass** als ein erstes Mittel (SW) ein Taktschalter (SW) vorgesehen ist, der einen ersten Steuereingang (SWI1) aufweist, an dem das Steuersignal (SWS) zugeführt wird, der einen ersten Schaltereingang (ISW1) aufweist, an dem das Fülltaktsignal (FCL) zugeführt wird, der einen zweiten Schaltereingang (ISW2) aufweist, an dem das zweite Taktsignal (CL2) zugeführt wird, der einen Schalterausgang (OSW) aufweist, an dem das erste Taktsignal (CL1) abgegeben wird, wobei je nach Zustand des Steuersignals (SWS) erster bzw. zweiter Schaltereingang (ISW1, ISW2) mit dem Schalterausgang (OSW) verbunden ist.

9. Anordnung nach einem der Ansprüche 1 bis 7,
dass als ein zweites Mittel (DLC) eine direkte Schleifenverbindung (DLC) vom zweiten Regeneratorausgang (CDR02) zum Bitmustergeneratoreingang (GCGI) vorgesehen ist, wobei vorzugsweise als ein drittes Mittel (CDR) der Regenerator (CDR) einen zweiten Steuereingang (SWI2) aufweist, dem das Steuersignal (SWS) zugeführt wird und wobei vorzugsweise eine Phasenregelschleife des Regenerators (CDR) je nach Zustand des Steuersignals (SWS) im normalen Betrieb arbeitet oder so außer Betrieb gesetzt wird, dass die Schleifentaktfrequenz (CLFL) des zweiten Taktsignals (CL2) einen in Entfernung von den Rändern des Abstimmbereichs dieser Phasenregelschleife liegenden Wert annimmt.

10. Verfahren für eine Entfernungsmessung mit Hilfe eines gemäß einem ersten Taktsignal (CL1) getakteten Bitmustersignals (GC), eines Sendesignals (TXS), welches von einem Sender (TX) ausgesendet wird und das Bitmustersignal (GC) enthält, und eines Empfangssignals (RXS), das von einem Empfänger (RX), von welchem das Sendesignal (TXS) empfangen wird, abgegeben wird, wobei die Verzögerung des Empfangssignals (RXS) gegenüber dem Sendesignal (TXS) gemessen wird,
**dadurch gekennzeichnet,**
**dass** aus dem Empfangssignal (RXS) ein zweites Taktsignal (CL2) wiedergewonnen wird,
**dass** das zweite Taktsignals (CL2) als erstes Taktsignal (CL1) verwendet wird,
**dass** ein Taktsignalparameter (CLFL, CLTL, F1, F2, T1, T2) eines Taktsignals (CL1, CL2) gemessen wird.

11. Verfahren nach Anspruch 10,
**dadurch gekennzeichnet,**
**dass** ein Verzögerungszählstand (DCC1, DCC2) ermittelt wird, der einer linearen Funktion der Anzahl von Symboldauern des Taktsignals (CL1, CL2) zwischen Sender (TX) und Empfänger (RX) entspricht.

12. Verfahren nach Anspruch 10 oder 11,
**dadurch gekennzeichnet,**
**dass** aus einem Zählreferenzsignal (CR) ein Zählintervall (TC) abgeleitet wird, dass die Anzahl der innerhalb des Zählintervalls (TC) auftretenden Impulse des Taktsignals (CL1, CL2) gezählt wird und als Frequenzzählstand (F1, F2) einen Taktsignalparameter (CLFL, F1, F2) bildet, wobei vorzugsweise eine Pfadlänge (D1, D2) gleich einem Verzögerungszählstand (DCC1, DCC2) geteilt durch einen Frequenzzählstand (F1, F2) mal eine erste Konstante (a1) berechnet wird (D1 = DCC1/F1*a1, D2 = DCC2/F2*a1), und/oder wobei vorzugsweise das Sendesignal (TXS) abwechselnd über einen ersten Messpfad (P1) und einen zweiten Messpfad (P2) übertragen wird, für die ein erster bzw. zweiter Verzögerungszählstand (DCC1, DCC2) und ein erster bzw. zweiter Frequenzzählstand (F1, F2) ermittelt werden.

13. Verfahren nach Anspruch 10 oder 11,
**dadurch gekennzeichnet,**
**dass** aus dem Taktsignal (CL1, CL2) ein Zählintervall (TC) abgeleitet wird, dass die Anzahl der innerhalb des Zählintervalls (TC) auftretenden Impulse eines Zählreferenzsignal (CR) gezählt wird und als Symboldauerzählstand (T1, T2) einen Taktsignalparameter (CLTL, T1, T2) bildet, wobei vorzugsweise eine Pfadlänge (D1, D2) gleich einem Verzögerungszählstand (DCC1, DCC2) mal einen Symboldauerzählstand (T1, T2) mal eine fünfte Konstante (a5) berechnet wird (D1 = DCC1*T1*a5, D2 = DCC2*T2*a5), und/oder wobei vorzugsweise das Sendesignal (TXS) abwechselnd über einen ersten Messpfad (P1) und einen zweiten Messpfad (P2) übertragen wird, für die ein erster bzw. zweiter Verzögerungszählstand (DCC1, DCC2) und ein erster bzw. zweiter Symboldauerzählstand (T1, T2) ermittelt werden.

14. Verfahren nach einem der Ansprüche 10 bis 13,
**dadurch gekennzeichnet,**
**dass** als erstes Taktsignal (CL1) je nach Zustand des Steuersignals (SWS) ein Fülltaktsignal (FCL) oder das zweite Taktsignal (CL2) in einem Taktschalter (SW) ausgewählt wird.

15. Verfahren nach einem der Ansprüche 10 bis 13,
**dadurch gekennzeichnet,**
**dass** als erstes Taktsignal (CL1) über eine direkte Schleifenverbindung (DLC) direkt das zweite Taktsignal (CL2) ausgewählt wird, wobei vorzugsweise eine Phasenregelschleife eines Regenerators (CDR), durch den aus dem Empfangssignal (RXS) das zweite Taktsignal (CL2) wiedergewonnen wird, je nach Zustand des Steuersignals (SWS) in normalen Betrieb versetzt wird oder so außer Betrieb gesetzt wird, dass die Schleifentaktfrequenz (CLFL) des zweiten Taktsignals (CL2) einen in Entfernung von den Rändern des Abstimmbereichs dieser Phasenregelschleife liegenden Wert annimmt.
